# EUROPEAN PATENT APPLICATION

(11) **EP 4 564 889 A1**
(43) Date of publication of application: **04.06.2025**
(21) Application number: 23849186.4
(22) Date of filing: 13.07.2023
(51) Int. Cl.: H04W 24/04

(54) **METHOD AND APPARATUS FOR RECOGNIZING UNREACHABLE STATE OF DEVICE**

(30) Priority: 05.08.2022 CN 202210938675
(71) Applicant: Huawei Technologies Co., Ltd., Shenzhen, Guangdong 518129 (CN)
(72) Inventor: LI, Guangjun, Shenzhen, Guangdong 518129 (CN); WANG, Kunlun, Shenzhen, Guangdong 518129 (CN); NIE, Guangcai, Shenzhen, Guangdong 518129 (CN)
(74) Representative: Maiwald GmbH
(86) International application number: PCT/CN2023/107127
(87) International publication number: WO 2024/027477

(57) **Abstract**

This application provides a method for identifying an out-of-management state of a device and an apparatus, to improve efficiency of locating the out-of-management state, and relates to the field of wireless communication technologies. In the method, a management device sends first measurement request information to a first device, where the first measurement request information indicates to measure information about a second device. The management device receives first measurement report information from the first device, where the first measurement report information includes at least one piece of information about the second device. The management device determines, based on the at least one piece of information about the second device, that transmission of the second device is abnormal or that the second device is powered off. Based on the foregoing solution, the management device may determine an out-of-management state of the second device via the at least one piece of information from the first device, so that the out-of-management state of the second device can be quickly and accurately identified, the management device can provide an accurate processing suggestion, and a frequency of arranging manual site visits is greatly reduced, to reduce operations and maintenance costs.

## Description

### CROSS-REFERENCE TO RELATED APPLICATIONS

This application claims priority to Chinese Patent Application No. 202210938675.5, filed with the China National Intellectual Property Administration on August 5, 2022 and entitled "METHOD FOR IDENTIFYING OUT-OF-MANAGEMENT STATE OF DEVICE AND APPARATUS", which is incorporated herein by reference in its entirety.

### TECHNICAL FIELD

This application relates to the field of wireless communication technologies, and in particular, to a method for identifying an out-of-management state of a device and an apparatus.

### BACKGROUND

Currently, out-of-management scenarios of a network device are diverse. Therefore, when the network device is out of management, an out-of-management state of the network device needs to be located, to determine the out-of-management scenario of the network device, and facilitate repair of out-of-management of the network device, so that a network management device can maintain and manage the network device. Currently, a manner for locating the out-of-management state of the network device may include the following manners. For example, it is determined, by manually checking a working status on a transmission side, whether transmission is abnormal. For another example, it is determined, by consulting a power supply unit, whether the power supply unit encounters power-off in batches.

It can be learned that, according to an existing method for locating the out-of-management state of the network device, manpower consumption is large, and time required for locating the out-of-management state is long, resulting in a waste of human resources and low management efficiency.

### SUMMARY

This application provides a method for identifying an out-of-management state of a device and an apparatus, to improve efficiency of locating the out-of-management state.

According to a first aspect, a method for identifying an out-of-management state of a device is provided. The method may be performed by a management device, or may be performed by a chip with a function similar to that of the management device. In the method, the management device sends first measurement request information to a first device, where the first measurement request information indicates to measure information about a second device; and the first device is a neighboring cell device of the second device, and the second device is an out-of-management device. The management device receives first measurement report information from the first device, where the first measurement report information includes at least one piece of information about the second device, the at least one piece of information about the second device is used for determining an out-of-management state of the second device, and the out-of-management state of the second device includes that transmission of the second device is abnormal or that the second device is powered off. The management device determines, based on the at least one piece of information about the second device, that transmission of the second device is abnormal or that the second device is powered off.

Based on the foregoing solution, the management device may determine the out-of-management state of the second device in at least one out-of-management state of the second device from the first device, so that the out-of-management state of the second device can be quickly and accurately identified, the management device can provide an accurate processing suggestion, and a frequency of arranging manual site visits is greatly reduced, to reduce operations and maintenance costs. In addition, the first device and a terminal device may not need an additional apparatus, and impact on an existing service is small.

In a possible case, the first measurement report information includes information that is about the second device and that is measured by at least one terminal device.

In another possible case, the first measurement report information includes at least one out-of-management state of the second device, and the at least one out-of-management state is determined by the first device based on information that is about the second device and that is measured by at least one terminal device. Based on the foregoing solution, the management device may determine whether the terminal device can obtain the information about the second device through measurement, so that the management device may determine whether the second device can send the information, to determine whether transmission of the second device is abnormal. In comparison with a technical solution in which the first device sends one or more pieces of second measurement report information to the management device, the method in which the first device sends the first measurement report information to the management device can reduce air interface transmission overheads, and can reduce an amount of information that needs to be processed by the management device.

In a possible implementation, the management device determines the first device based on configuration information of the second device, where the configuration information includes neighboring cell device information of the second device.

In a possible implementation, the management device stores the configuration information of the second device, and the configuration information includes the neighboring cell device information of the second device.

In a possible case, the configuration information of the second device may be sent by the second device to the management device when the second device is connected to the management device. For example, the configuration information of the second device may be sent by the second device to the management device when the second device establishes a connection to the management device for the first time.

In a possible implementation, the management device stores at least one of inventory information, alarm information, performance data information, and log information of the second device.

Based on the foregoing solution, the management device may determine neighboring cell devices of the second device based on the configuration information of the second device, to measure the information about the second device.

In a possible implementation, the first device is first N devices sorted in ascending order of distances from the neighboring cell devices of the second device to the second device, and N is an integer greater than or equal to 1; or the first device is first N devices sorted in descending order of signal strength of the neighboring cell devices of the second device, and N is an integer greater than or equal to 1; and the signal strength of the neighboring cell devices of the second device is reported by the second device.

Based on the foregoing solution, a neighboring cell device closer to the second device or a neighboring cell device with larger signal strength is selected, so that a success rate of detecting the information about the second device can be improved.

In a possible implementation, when at least one out-of-management state that transmission of the second device is abnormal exists in the out-of-management state of the second device, it is determined that transmission of the second device is abnormal; or when at least one out-of-management state that transmission of the second device is abnormal does not exist in the out-of-management state of the second device, it is determined that the second device is powered off.

Based on the foregoing solution, the management device can accurately identify an out-of-management state of a base station via a wireless air interface technology and a result of measuring the information about the second device by the terminal device, to reduce manpower input and reduce operations and maintenance costs.

According to a second aspect, a method for identifying an out-of-management state of a device is provided. The method may be performed by a first device, or may be performed by a chip with a function similar to that of the first device. Optionally, the first device may be a network device or a terminal device. In the method, the first device receives first measurement request information from a management device, where the first measurement request information indicates to measure information about a second device; and the first device is a neighboring cell device of the second device, and the second device is an out-of-management device. The first device sends second measurement request information to at least one terminal device, where the second measurement request information indicates to measure the information about the second device. The first device receives second measurement report information from the at least one terminal device, where the second measurement report information includes information that is about the second device and that is obtained by the at least one terminal device through measurement. The first device sends first measurement report information to the management device, where the first measurement report information is determined based on the second measurement report information of the at least one terminal device.

Based on the foregoing solution, the first device may indicate the terminal device to measure the information about the second device, and determine an out-of-management state of the second device based on a measurement result of the terminal device. Therefore, an out-of-management state of a base station can be accurately identified via a wireless air interface technology, to reduce manpower input and reduce operations and maintenance costs.

In a possible case, the first measurement report information includes information that is about the second device and that is measured by the at least one terminal device.

In another possible case, the first measurement report information includes at least one out-of-management state of the second device, the at least one out-of-management state of the second device is determined based on the information that is about the second device and that is obtained by the at least one terminal device through measurement, and the out-of-management state of the second device includes that transmission of the second device is abnormal or that the second device is powered off. Based on the foregoing solution, the management device may determine whether the terminal device can obtain the information about the second device through measurement, so that the management device may determine whether the second device can send the information, to determine whether transmission of the second device is abnormal. In comparison with a technical solution in which the first device sends one or more pieces of second measurement report information to the management device, the method in which the first device sends the first measurement report information to the management device can reduce air interface transmission overheads, and can reduce an amount of information that needs to be processed by the management device.

In a possible implementation, the second measurement request information includes at least one of the following: physical cell identifier (physical cell identifier, PCI) measurement request information, cell global identifier (cell global identifier, CGI) measurement request information, and new radio cell global identifier (new radio CGI, NCGI) measurement request information.

In a possible implementation, the at least one terminal device is determined based on a measurement report reported by M terminal devices; and the at least one terminal device is a terminal device whose measurement report includes a measurement result of the second device and that is in the M terminal devices, and M is an integer greater than or equal to 1.

Based on the foregoing solution, a terminal device that can historically obtain the information about the second device, for example, signal strength, through measurement is selected to measure the information about the second device, so that a success rate of detecting the information about the second device can be improved.

According to a third aspect, a communication apparatus is provided, and includes a processing unit and a transceiver unit.

The transceiver unit is configured to send first measurement request information to a first device, where the first measurement request information indicates to measure information about a second device; and the first device is a neighboring cell device of the second device, and the second device is an out-of-management device. The transceiver unit is further configured to receive first measurement report information from the first device, where the first measurement report information includes at least one piece of information about the second device, the at least one piece of information about the second device is used for determining an out-of-management state of the second device, and the out-of-management state of the second device includes that transmission of the second device is abnormal or that the second device is powered off. The processing unit is configured to determine, based on the at least one piece of information about the second device, that transmission of the second device is abnormal or that the second device is powered off.

In a possible case, the first measurement report information includes information that is about the second device and that is measured by at least one terminal device.

In another possible case, the first measurement report information includes at least one out-of-management state of the second device, and the at least one out-of-management state is determined by the first device based on information that is about the second device and that is measured by at least one terminal device.

In a possible implementation, the processing unit is further configured to determine the first device based on configuration information of the second device, where the configuration information includes neighboring cell device information of the second device.

In a possible implementation, the first device is first N devices sorted in ascending order of distances from neighboring cell devices of the second device to the second device, and N is an integer greater than or equal to 1; or the first device is first N devices sorted in descending order of signal strength of neighboring cell devices of the second device, and N is an integer greater than or equal to 1; and the signal strength of the neighboring cell devices of the second device is reported by the second device.

In a possible implementation, the processing unit is specifically configured to: determine, when at least one out-of-management state that transmission of the second device is abnormal exists in the out-of-management state of the second device, that transmission of the second device is abnormal; or determine, when at least one out-of-management state that transmission of the second device is abnormal does not exist in the out-of-management state of the second device, that the second device is powered off.

In a possible implementation, the management device stores the configuration information of the second device, and the configuration information includes the neighboring cell device information of the second device.

In a possible implementation, the management device stores at least one of inventory information, alarm information, performance data information, and log information of the second device.

According to a fourth aspect, a communication apparatus is provided, and includes a processing unit and a transceiver unit.

The transceiver unit is configured to receive first measurement request information from a management device, where the first measurement request information indicates to measure information about a second device; and the first device is a neighboring cell device of the second device, and the second device is an out-of-management device. The transceiver unit is further configured to send second measurement request information to at least one terminal device, where the second measurement request information indicates to measure the information about the second device. The transceiver unit is further configured to receive second measurement report information from the at least one terminal device, where the second measurement report information includes information that is about the second device and that is obtained by the at least one terminal device through measurement. The processing unit is configured to determine first measurement report information based on the information that is about the second device and that is obtained by the at least one terminal device through measurement. The transceiver unit is further configured to send the first measurement report information to the management device.

In a possible case, the first measurement report information includes information that is about the second device and that is measured by the at least one terminal device.

In another possible case, the first measurement report information includes at least one out-of-management state of the second device, the at least one out-of-management state of the second device is determined based on the information that is about the second device and that is obtained by the at least one terminal device through measurement, and the out-of-management state of the second device includes that transmission of the second device is abnormal or that the second device is powered off.

In a possible implementation, the second measurement request information includes at least one of the following: PCI measurement request information, CGI measurement request information, and NCGI measurement request information.

In a possible implementation, the at least one terminal device is determined based on a measurement report reported by M terminal devices; and the at least one terminal device is a terminal device whose measurement report includes a measurement result of the second device and that is in the M terminal devices, and M is an integer greater than or equal to 1.

According to a fifth aspect, an embodiment of this application provides a communication apparatus. The communication apparatus may be the communication apparatus according to either of the third aspect and the fourth aspect in the foregoing embodiments, or may be a chip arranged in the communication apparatus according to either of the third aspect and the fourth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is enabled to perform the method performed by a management device in any one of possible implementations of the first aspect, or the communication apparatus is enabled to perform the method performed by a first device in any one of possible implementations of the second aspect.

It should be understood that, the communication interface may be implemented by an antenna, a feeder, a codec, or the like in the communication apparatus. Alternatively, if the communication apparatus is a chip arranged in a communication device at a transmit end or a communication device at a receive end, the communication interface may be an input/output interface of the chip, for example, an input/output pin. The communication apparatus may further include a transceiver, used by the communication apparatus to communicate with another device. For example, when the communication apparatus is the first device, the another device is the management device or a terminal device; or when the communication apparatus is the management device, the another device is the first device.

According to a sixth aspect, this application provides a communication apparatus, including a logic circuit and an input/output interface.

For example, the input/output interface is configured to output first measurement request information to a first device, where the first measurement request information indicates to measure information about a second device; and the first device is a neighboring cell device of the second device, and the second device is an out-of-management device. The input/output interface is further configured to input first measurement report information from the first device, where the first measurement report information includes at least one piece of information about the second device, the at least one piece of information about the second device is used for determining an out-of-management state of the second device, and the out-of-management state of the second device includes that transmission of the second device is abnormal or that the second device is powered off. The logic circuit is configured to determine, based on at least one out-of-management state of the second device, that transmission of the second device is abnormal or that the second device is powered off.

For example, the input/output interface is configured to input first measurement request information from a management device, where the first measurement request information indicates to measure the information about the second device; and the first device is the neighboring cell device of the second device, and the second device is the out-of-management device. The input/output interface is further configured to output second measurement request information to at least one terminal device, where the second measurement request information indicates to measure the information about the second device. The input/output interface is further configured to input second measurement report information from the at least one terminal device, where the second measurement report information includes information that is about the second device and that is obtained by the at least one terminal device through measurement. The logic circuit is configured to determine the first measurement report information based on the information that is about the second device and that is obtained by the at least one terminal device through measurement. The input/output interface is further configured to output the first measurement report information to the management device.

According to a seventh aspect, an embodiment of this application provides a chip system. The chip system includes a processor, and may further include a memory, to implement possible implementations of either of the first aspect and the second aspect. In a possible implementation, the chip system further includes a memory configured to store program instructions and/or data. The chip system may include a chip, or may include the chip and another discrete component.

According to an eighth aspect, an embodiment of this application provides a communication system. The communication system includes the communication apparatus according to the third aspect and the communication apparatus according to the fourth aspect.

According to a ninth aspect, this application provides a computer-readable storage medium. The computer-readable storage medium stores a computer program or instructions. When the computer program or the instructions are run, the method performed by a management device or a first device in the foregoing aspects is implemented.

According to a tenth aspect, a computer program product is provided. The computer program product includes computer program code or instructions. When the computer program code or the instructions are run, the method performed by a management device in the foregoing aspects is performed, or the method performed by a first device in the foregoing aspects is performed.

For beneficial effects of the second aspect to the tenth aspect and implementations thereof, refer to descriptions of beneficial effects of the method in the first aspect and implementations thereof.

### BRIEF DESCRIPTION OF DRAWINGS

FIG. 1 is one of diagrams of a communication system 100 according to an embodiment of this application;
FIG. 2 is one of diagrams of a communication system 100 according to an embodiment of this application;
FIG. 3 is a diagram of an out-of-management scenario of a network device according to an embodiment of this application;
FIG. 4 is one of example flowcharts of a method for identifying an out-of-management state of a device according to an embodiment of this application;
FIG. 5 is one of example flowcharts of a method for identifying an out-of-management state of a device according to an embodiment of this application;
FIG. 6 is one of diagrams of a communication apparatus according to an embodiment of this application;
FIG. 7 is one of diagrams of a communication apparatus according to an embodiment of this application;
FIG. 8 is one of diagrams of a communication apparatus according to an embodiment of this application; and
FIG. 9 is one of diagrams of a communication apparatus according to an embodiment of this application.

### DESCRIPTION OF EMBODIMENTS

To facilitate understanding of technical solutions provided in embodiments of this application, the following explains and describes technical terms involved in embodiments of this application.
(1) A management device refers to a server that manages a device. Optionally, a management device that manages a network device may also be referred to as a network management device.
(2) Out of management means that a device is disconnected from a management device of the device. Consequently, the management device cannot maintain the device.

The following explains and describes the technical solutions provided in embodiments of this application with reference to the accompanying drawings.

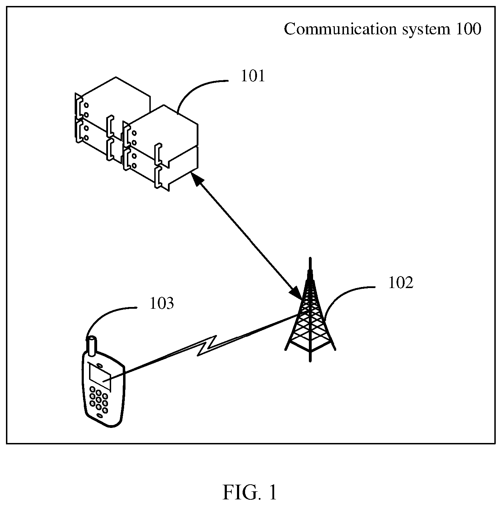

FIG. 1 is a diagram of a communication system 100 according to an embodiment of this application. The communication system 100 may include a network management device 101 and a network device 102. The network management device 101 may maintain and manage the network device 102. The communication system 100 may further include at least one terminal device 103.

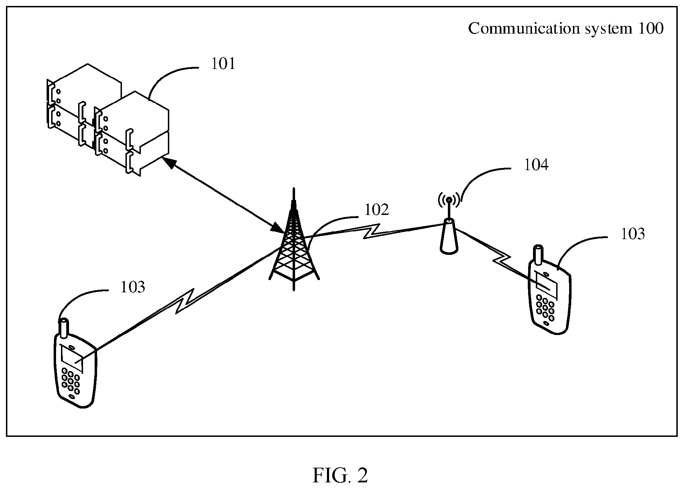

Optionally, refer to FIG. 2. The communication system 100 may further include at least one integrated access backhaul (integrated access backhaul, IAB) 104. The IAB 104 may communicate with the network device 102, and the IAB 104 may provide a service for the at least one terminal device 103.

The terminal device involved in this application includes a device that provides a voice and/or data connectivity for a user. Specifically, the terminal device includes a device that provides the voice for the user, includes a device that provides the data connectivity for the user, or includes a device that provides the voice and the data connectivity for the user. For example, the terminal device may include a handheld device having a wireless connection function or a processing device connected to a wireless modem. The terminal device may include user equipment (user equipment, UE), a wireless terminal device, a mobile terminal device, a device-to-device (device-to-device, D2D) communication terminal device, a vehicle-to-everything (vehicle to everything, V2X) terminal device, a machine-to-machine/machine-type communication (machine-to-machine/machine-type communications, M2M/MTC) terminal device, an Internet of things (internet of things, IoT) terminal device, a subscriber unit (subscriber unit), a subscriber station (subscriber station), a mobile station (mobile station), a remote station (remote station), an access point (access point, AP), a remote terminal device (remote terminal), an access terminal device (access terminal), a user terminal device (user terminal), a user agent (user agent), a user device (user device), a satellite, an unmanned aerial vehicle, a balloon, an aircraft, or the like. For example, the terminal device may include a mobile phone (or referred to as a "cellular" phone), a computer having a mobile terminal device, or a portable, pocket-sized, handheld, or computer-embedded mobile apparatus. For example, the terminal device may be a device such as a personal communication service (personal communication service, PCS) phone, a cordless phone, a session initiation protocol (session initiation protocol, SIP) phone, a wireless local loop (wireless local loop, WLL) station, or a personal digital assistant (personal digital assistant, PDA). The terminal device may further include a limited device, such as a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner. By way of example, and not limitation, in embodiments of this application, the terminal device may alternatively be a wearable device. The wearable device may also be referred to as a wearable intelligent device, an intelligent wearable device, or the like, and is a general term for wearable devices developed by intelligently designing daily wear by applying a wearable technology. If various terminal devices described above are located on a vehicle (for example, placed in the vehicle or mounted in the vehicle), the terminal devices may all be considered as vehicle-mounted terminal devices. For example, the vehicle-mounted terminal device is also referred to as an on-board unit (on-board unit, OBU).

The network device involved in this application includes, for example, an access network (access network, AN) device, for example, a base station (for example, an access point), and may be a device in an access network that communicates with a wireless terminal device over an air interface through one or more cells. Alternatively, for example, the network device is a road side unit (road side unit, RSU) in a vehicle-to-everything (vehicle-to-everything, V2X) technology. The network device may include an evolved base station (NodeB or eNB or e-NodeB, evolved NodeB) in a long term evolution (long term evolution, LTE) or long term evolution-advanced (long term evolution-advanced, LTE-A) system, or may include a next generation NodeB (next generation NodeB, gNB) in an evolved packet core (evolved packet core, EPC) network, a 5th generation (5th generation, 5G) mobile communication technology, a new radio (new radio, NR) system (also referred to as an NR system for short), or may include a central unit (central unit, CU) and a distributed unit (distributed unit, DU) in a cloud access network (cloud radio access network, Cloud RAN) system, a satellite, an unmanned aerial vehicle, a balloon, an aircraft, or the like. This is not limited in embodiments of this application.

Based on a separate source and channel coding (separate source and channel coding, SSCC) solution, an existing communication system using a cellular communication technology, a wireless communication technology (Wi-Fi), or the like first performs source coding or compression processing on to-be-sent source data, performs channel coding on compressed data, and adds redundancy, to improve reliability of information transmission. Source coding is generally completed at an application layer, and channel coding is generally completed at a physical layer. Traditional source coding, such as source coding for a picture, a video, a voice, and a text, does not have an error resistance capability. Therefore, channel coding needs to be performed at the physical layer and a mechanism such as retransmission is used, so that a receive end completes error-free recovery of a bit transmitted at the physical layer. For the physical layer, channel coding and transmission are mainly performed on a bit stream obtained through conventional source coding. It is assumed that ideal source coding has been completed at an upper layer, and an approximately equal sequence is obtained. Generally, only a lossless transmission mode can be supported. However, in actual application, some data that is not fully compressed, such as control information from a link layer or the physical layer, to-be-fed-back channel state information, and a part of upper-layer application data, may be processed at the physical layer.

The technical solutions provided in embodiments of this application may be applied to communication between a network management device and a communication device, and operations and maintenance management performed by the network management device on the communication device. Wireless communication between communication devices may include wireless communication between a network device and a terminal, wireless communication between network devices, and wireless communication between terminals. In embodiments of this application, the term "wireless communication" may also be briefly referred to as "communication", and the term "communication" may also be described as "data transmission", "information transmission", or "transmission".

In embodiments of this application, "at least one" may alternatively be described as one or more, and "more" may be two, three, four, or more. This is not limited in this application.

In embodiments of this application, for a technical feature, technical features in the technical features are distinguished by using "first", "second", "third", "A", "B", "C", "D", and the like. There is no chronological order or no size order between the technical features described by using the "first", "second", "third", "A", "B", "C", and "D".

Currently, due to some abnormality reasons, the network device is disconnected from the network management device, and the network management device cannot maintain the network device, resulting in unchangeable service management.

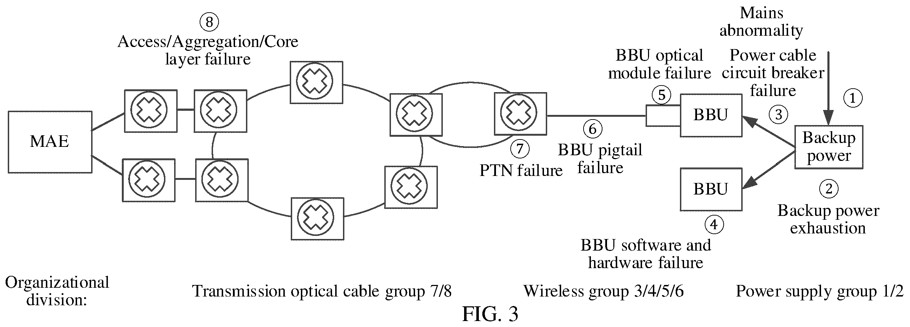

FIG. 3 is a diagram of an out-of-management scenario of a network device according to an embodiment of this application. It can be learned from FIG. 3 that, the network device communicates with a network management device by using a wired network. The out-of-management scenario of the network device may be classified into ① to ⑧ shown in FIG. 3. Such out-of-management scenarios are introduced below in Table 1.

| Out-of-management scenario | Occurrence frequency and complexity of out of management | Whether quick judgment can be made | Existing check method | Disadvantage |
|---|---|---|---|---|
| Abnormal transmission in ⑤, ⑥, ⑦, and ⑧ | High, high | No. This is easily confused with power-off. | Checking transmission devices one by one | Large quantity of transmission devices, large manpower input, and high time consumption |
| Power-off in ① and ② | High, high | No. This is usually confused with abnormal transmission. | Checking by an alarm, by consulting an electric power company, and by visiting a site | Large manpower input and difficulty in checking |
| Abnormal software in ④ | Medium, low | Yes. An operation record can be quickly checked. | Restoring configuration | Experienced staff are required |
| Abnormal hardware in ④ | Low, high | A part of scenarios can be quickly judged. | Checking by an alarm and by an event | The device needs to be returned to a factory |

In a plurality of out-of-management scenarios shown in Table 1, an out-of-management state of the network device is usually classified into two types.

Type 1: Transmission is abnormal, such as wired network disconnection, route tampering, and abnormal attack on transmission. This may include ⑤ to ⑧ shown in Table 1.

Type 2: The network device is abnormal, such as network device reset, power-off, and abnormal software and hardware. This may include ① to ④ shown in Table 1.

Currently, out-of-management scenarios of the network device are diverse. Therefore, when the network device is out of management, the out-of-management state of the network device needs to be located, to determine the out-of-management scenario of the network device, and facilitate repair of out-of-management of the network device, so that the network management device can maintain and manage the network device. Currently, there are the following three manners for locating the out-of-management state of the network device.

Manner 1: It is determined, by manually checking a working status on a transmission side, whether transmission is abnormal.

In Manner 1, one by one check on transmission devices is mainly performed by a worker, to determine whether transmission is abnormal. A disadvantage of Manner 1 is that, there are a large quantity of transmission devices and planning is complex. Usually, wireless operation and transmission operation are run by different departments, involving a large amount of coordination manpower and high consumption. Therefore, it is difficult to quickly determine a type of the out-of-management state in a short period of time.

Manner 2: It is determined, by consulting a power supply unit, whether the power supply unit encounters power-off in batches.

In Manner 2, communication with the power supply unit is required, to determine whether power-off in batches exists. A disadvantage of Method 2 is that, although consultation works when power supply is powered off in batches, if power supply is not powered off in batches, a person needs to be dispatched to the site to check an actual situation.

Manner 3: Manual judgment is required for determining abnormal transmission and power-off.

In Manner 3, currently, manpower, rather than a technical reason, is usually relied on for determining that transmission of the device is abnormal or that the device is powered off, resulting in manpower waste and low management efficiency. Consequently, costs are high.

It can be learned from the foregoing three manners that, according to an existing method for locating the out-of-management state of the network device, manpower consumption is large, and time required for locating the out-of-management state is long, resulting in a waste of human resources and low management efficiency.

In view of this, an embodiment of this application provides a method for identifying an out-of-management state of a device. In this method, an out-of-management state of an out-of-management device may be identified via a neighboring cell device of the out-of-management device.

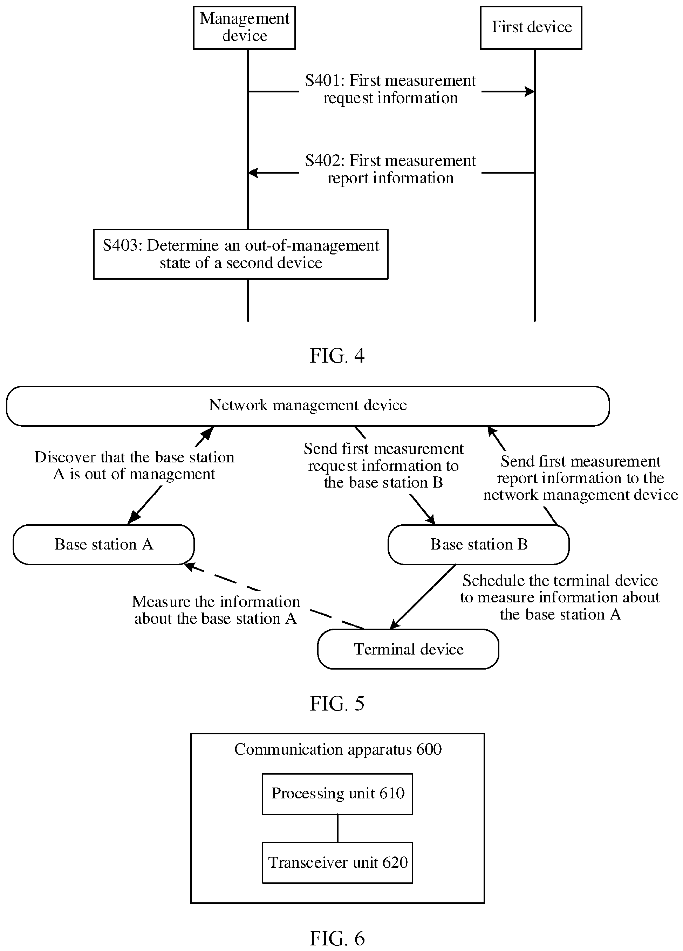

FIG. 4 is an example flowchart of a method for identifying an out-of-management state of a device according to an embodiment of this application. The method may include the following operations.

S401: A management device sends first measurement request information to a first device.

Correspondingly, the first device receives the first measurement request information from the management device.

The first measurement request information may indicate to measure information about a second device, such as signal strength of the second device or an identifier of the second device. It may be understood that, the first device may be a neighboring cell device of the second device. For example, the first device may be a neighboring cell network device of the second device, for example, a neighboring cell base station.

In a possible implementation, the second device may be an out-of-management device. For example, the second device may be an out-of-management base station. The management device may discover that the second device is out of management.

In a possible case, the management device may send first information to the second device, to determine whether the second device is out of management. For example, when the second device receives the first information from the management device, the second device may send response information of the first information to the management device. When the management device receives the response information of the first information from the second device, the management device may consider that the second device is not out of management. When the management device does not receive the response information of the first information from the second device, the management device may consider that second information is out of management.

Optionally, when the management device does not receive the response information of the first information from the second device, the management device may send the second information to the second device. The second information may include configuration information for establishing a connection, and is used for re-establishing a connection to the second device. The second device may re-establish the connection to the management device based on the configuration information. When re-establishment of the connection succeeds, the second device may send third information to the management device, where the third information indicates that reconnection succeeds. When the management device does not receive the third information within specified duration, the management device may consider that reconnection to the second device is unsuccessful, and that the second device is out of management. In a possible case, if the management device does not receive the third information within the specified duration, the management device may return to perform an operation of sending the second information to the second device until a quantity of times of sending the second information to the second device reaches a preset threshold. When the quantity of times that the management device sends the second information to the second device reaches the preset threshold and the third information from the second device is not received in all cases, the management device may consider that the second device is out of management. The preset threshold may be preset, negotiated by the management device and the second device, or predefined in a protocol, for example, an integer such as 5, 10, or 20.

When the management device discovers that the second device is out of management, the management device may determine a neighboring cell device of the second device. For example, the management device may determine a neighboring cell network device, which is also referred to as a neighboring cell base station, of the second device. For example, the management device may determine neighboring cell information of the second device based on the configuration information of the second device. Optionally, after the second device establishes the connection to the management device, the second device may send at least one of configuration information, alarm information, inventory information, performance data information, and log information to the management device.

The alarm information may include related information of an alarm triggered by the second device. For example, when the second device is out of management, the alarm information may include out-of-management alarm information. For another example, when the second device has an abnormal running state, the alarm information may include alarm information of abnormal running of the second device. The configuration information may include basic configuration information required for working of the second device, such as frequency information of the second device, used working mode ratio information, a neighboring cell relationship, frequency information of a neighboring cell, an operator relationship, and other information. The inventory information may include peripheral information that supports running of the second device, such as a baseband processing unit (building baseband unit, BBU), a remote radio unit (remote radio unit, RRU), an antenna, a subrack, a cabinet, and other information. The performance data information may include some information collected after the second device runs dynamically, such as a quantity of users for which the second device provides a service, user information, and a user throughput. The log information may include information that is generated in a running process of the second device and that needs to be recorded, and may be information that is required to be recorded by a customer to which the second device belongs, such as security information, internal abnormality information, and information for location.

In a possible implementation, the management device may select one or more neighboring cell devices from the neighboring cell device of the second device, that is, the management device may select one or more first devices. For example, the management device may select first N first devices in ascending order of distances from neighboring cell devices of the second device to the second device. N may be an integer greater than or equal to 1, and N may be predefined or preconfigured in a protocol, for example, an integer such as 2, 3, or 4. For example, the management device may select first N first devices in descending order of signal strength of the neighboring cell devices of the second device. It may be understood that, the signal strength of the neighboring cell devices of the second device may be sent by the second device to the management device. For example, a terminal device camping on the second device may measure the neighboring cell devices of the second device, and send a measurement report to the second device. The measurement report indicates the signal strength of the neighboring cell devices of the second device. The second device may send the signal strength of the neighboring cell devices of the second device to the management device when the second device is not out of management.

It should be noted that, a manner in which the management device selects the first device is not specifically limited in this embodiment of this application, and a quantity of first devices is not specifically limited.

S402: The first device sends first measurement report information of the first device to the management device.

Correspondingly, the management device receives the first measurement report information from the first device.

In a possible implementation, the first measurement report information may be received by the first device from a terminal device camping on the first device. For example, when the first device receives the first measurement request information from the management device, the first device may send second measurement request information to the terminal device, where the second measurement request information may be for requesting or indicate the terminal device to measure the information about the second device. Optionally, the second measurement request information may be physical cell identifier (physical cell identifier, PCI) measurement request information, or may be cell global identifier (cell global identifier, CGI) measurement request information, for example, new radio cell global identifier (new radio CGI, NCGI) measurement request information, or may be measurement request information of another measurement technology agreed upon by the second device and the terminal device. The measurement technology corresponding to the second measurement request information is not specifically limited in embodiments of this application.

Optionally, the first device may send the second measurement request information to one or more terminal devices. The one or more terminal devices may be selected by the first device from the terminal device camping on the first device. For example, the first device may select, from the terminal device camping on the first device, one or more terminal devices closer to the second device. For another example, the first device may select, based on a measurement report once reported by the terminal device camping on the first device, one or more terminal devices whose measurement report includes a measurement report of the second device. It may be understood that, a manner in which the first device selects the terminal device is not specifically limited in this embodiment of this application.

In a possible implementation, the terminal device may measure the information about the second device based on the second measurement request information. For example, when the second measurement request information is the PCI measurement request information, the terminal device may carry a PCI of the second device in second measurement report information, and send the second measurement report information to the first device. For another example, when the second measurement request information is the NCGI measurement request information, the terminal device may carry an NCGI of the second device in second measurement report information, and send the second measurement report information to the first device. It may be understood that, if the terminal device cannot obtain the information about the second device through measurement, the second measurement report information may not include the information about the second device. For example, when the terminal device cannot receive information broadcast by the second device, the terminal device may carry, in the second measurement report information, indication information indicating that the information about the second device cannot be obtained through measurement, and send the second measurement report information to the first device.

In a possible case, the first device may send one or more second measurement reports to the management device. In another possible case, the first device may process one or more pieces of second measurement report information, to obtain the first measurement report information. For example, the first device may determine, based on the second measurement report information, whether the terminal device can obtain the information about the second device through measurement. For example, when the second measurement report information includes the information about the second device such as the PCI or the NCGI, the first device may determine that the terminal device can obtain the information about the second device through measurement. In this case, the first device may consider that transmission of the second device is not abnormal. In this case, an out-of-management state that is of the second device and that is included in the first measurement report information indicates that transmission of the second device is not abnormal, and/or the second device is powered off. For another example, when the second measurement report information does not include the information about the second device, the first device may determine that the terminal device cannot measure the information about the second device. In this case, the first device may consider that transmission of the second device may be abnormal. In this case, an out-of-management state that is of the second device and that is included in the first measurement report information may indicate that transmission of the second device is abnormal.

Based on the foregoing solution, the management device may determine whether the terminal device can obtain the information about the second device through measurement, so that the management device may determine whether the second device can send the information, to determine whether transmission of the second device is abnormal. In comparison with a technical solution in which the first device sends one or more pieces of second measurement report information to the management device, the method in which the first device sends the first measurement report information to the management device can reduce air interface transmission overheads, and can reduce an amount of information that needs to be processed by the management device.

S403: The management device determines the out-of-management state of the second device.

The management device may determine the out-of-management state of the second device based on one or more pieces of first measurement report information. The out-of-management state may include abnormal transmission and/or power-off.

In a possible case, a first measurement report may include the information about the second device or may not include the information about the second device. If at least one piece of first measurement report information in the one or more pieces of first measurement report information includes the information about the second device, the management device may consider that the terminal device can obtain the information about the second device through measurement. Therefore, the management device may consider that transmission of the second device is not abnormal, and the management device may determine that the second device is powered off. If the first measurement report information including the information about the second device does not exist in the one or more pieces of first measurement report information, that is, none of the one or more pieces of first measurement report information includes the information about the second device, the management device may consider that the terminal device cannot obtain the information about the second device through measurement, and the management device may determine that transmission of the second device is abnormal.

In another possible case, the first measurement report information includes the out-of-management state of the second device. If at least one out-of-management state, indicating that transmission of the second device is not abnormal, and/or that the second device is powered off, exists in the out-of-management state included in the first measurement report information, the management device may consider that the second device is powered off. If at least one out-of-management state, indicating that transmission of the second device is not abnormal, and/or that the second device is powered off, does not exist in the out-of-management state included in the first measurement report information, the management device may consider that transmission of the second device is abnormal.

Based on the foregoing solution, the management device may determine the out-of-management state of the second device based on the measurement report information obtained by the terminal device through measurement of the information about the second device, so that the out-of-management state of the second device can be quickly and accurately identified, and the management device can provide an accurate processing suggestion. According to the technical solution provided in this embodiment of this application, an out-of-management state of a base station can be accurately identified via a wireless air interface technology, and the state can be fed back in a timely manner, to reduce manpower input and reduce operations and maintenance costs, so that over-arrangement of a person for site visits is avoided, and in particular in a suburb, a non-urban area, or an area with high site visit costs, this provides good guidance.

FIG. 5 is a schematic flowchart of a method for identifying an out-of-management state of a device according to an embodiment of this application. In FIG. 5, an example in which a second device is a base station and a management device is a network management device is used for description. In the embodiment shown in FIG. 5, the network management device may discover that a base station A is out of management. For a manner in which the network management device discovers that the base station A is out of management, refer to a manner in which the management device discovers that the second device is out of management in the embodiment shown in FIG. 4 for implementation. Details are not described herein again. The network management device may determine a neighboring station of the base station A, for example, a base station B. It may be understood that, for a manner in which the network management device determines the neighboring station of the base station A, refer to a manner in which the management device determines the first device in the embodiment shown in FIG. 4 for implementation. Details are not described herein again. In the embodiment shown in FIG. 5, an example in which there is one first device is used for description. Optionally, there may be one or more first devices, in other words, there may be one or more base stations B. The network management device may send first measurement request information to the base station B. Refer to S401 for implementation. The base station B may schedule a terminal device to measure information about the base station A. For example, the base station B may send second measurement request information to the terminal device. For a manner in which the base station B sends the second measurement request information to the terminal device, refer to a manner in which the first device sends the second measurement request information to the terminal device in the embodiment shown in FIG. 4 for implementation. Details are not described herein again.

The terminal device may measure the information about the base station A, for example, measure the information about the base station A based on an air interface message. For example, the terminal device may receive information broadcast by the base station A. If the terminal device can receive the information broadcast by the base station A, the terminal device can obtain the information about the base station A through measurement, and the terminal device may carry, in second measurement report information, information that is about the base station A and that is obtained through measurement and send the second measurement report information to the base station B. If the terminal device cannot receive the information broadcast by the base station A, the terminal device cannot obtain the information about the base station A through measurement, and second measurement report information sent by the terminal device to the base station B does not include the information about the base station A.

The base station B may determine an out-of-management state of the base station A based on the second measurement report information sent by the terminal device. For example, if at least one piece of second measurement report information in the second measurement report information received by the base station B includes the information about the base station A, the base station B may determine that transmission of the base station A is not abnormal, and the base station B may determine that the base station A is powered off; and an out-of-management state included in a first measurement request message indicates that the base station A is powered off. For another example, if second measurement report information including the information about the base station A does not exist in the second measurement report information received by the base station B, the base station B may determine that transmission of the base station Ais abnormal; and an out-of-management state included in a first measurement request message indicates that transmission of the base station A is abnormal. The base station B may send first measurement report information to the network management device, where the first measurement report information may include one or more out-of-management states of the base station A that are determined by the base station B. It may be understood that, for the first measurement report information, refer to the first measurement report information shown in FIG. 4. Details are not described herein again.

The network management device may determine the out-of-management state of the base station A based on the first measurement report information. Refer to S403 for implementation. For example, when at least one out-of-management state in the out-of-management states included in the first measurement report information indicates that the base station A is powered off, the network management device may determine that the base station A is powered off. For another example, when at least one out-of-management state, indicating that the base station A is powered off, does not exist in the out-of-management state included in the first measurement report information, that is, when the one or more out-of-management states included in the first measurement report information all indicate that transmission of the base station A is abnormal, the network management device may determine that transmission of the base station A is abnormal.

With reference to the accompanying drawings, the following describes communication apparatuses configured to implement the foregoing methods in embodiments of this application. Therefore, all the foregoing content may be used in subsequent embodiments. Repeated content is not described again.

FIG. 6 is a schematic block diagram of a communication apparatus 600 according to an embodiment of this application. The communication apparatus 600 may correspondingly implement functions or steps implemented by a management device or a first device in the foregoing method embodiments. The communication apparatus may include a processing unit 610 and a transceiver unit 620. Optionally, the communication apparatus may further include a storage unit. The storage unit may be configured to store instructions (code or a program) and/or data. The processing unit 610 and the transceiver unit 620 may be coupled to the storage unit. For example, the processing unit 610 may read the instructions (the code or the program) and/or the data in the storage unit, to implement a corresponding method. The foregoing units may be independently arranged, or may be partially or completely integrated.

In some possible implementations, the communication apparatus 600 can correspondingly implement behavior and functions of the management device in the foregoing method embodiments. For example, the communication apparatus 600 may be the management device, or may be a part (for example, a chip or a circuit) used in the management device. The transceiver unit 620 may be configured to perform all receiving or sending operations performed by the management device in embodiments shown in FIG. 4 and FIG. 5, for example, S401 and S402 in the embodiment shown in FIG. 4, and/or another process for supporting the technology described in this specification. The processing unit 610 is configured to perform all operations other than the receiving and sending operations performed by the management device in embodiments shown in FIG. 4 and FIG. 5, for example, S403 in the embodiment shown in FIG. 4, and/or another process for supporting the technology described in this specification.

For example, the transceiver unit 620 is configured to send first measurement request information to the first device, where the first measurement request information indicates to measure information about a second device; and the first device is a neighboring cell device of the second device, and the second device is an out-of-management device. The transceiver unit 620 is further configured to receive first measurement report information from the first device, where the first measurement report information includes at least one piece of information about the second device, the at least one piece of information about the second device is used for determining an out-of-management state of the second device, and the out-of-management state of the second device includes that transmission of the second device is abnormal or that the second device is powered off. The processing unit 610 is configured to determine, based on at least one out-of-management state of the second device, that transmission of the second device is abnormal or that the second device is powered off.

In a possible implementation, the processing unit 610 is further configured to determine the first device based on configuration information of the second device, where the configuration information includes neighboring cell device information of the second device.

In a possible implementation, the processing unit 610 is specifically configured to: determine, when at least one out-of-management state that transmission of the second device is abnormal exists in the out-of-management state of the second device, that transmission of the second device is abnormal; or determine, when at least one out-of-management state that transmission of the second device is abnormal does not exist in the out-of-management state of the second device, that the second device is powered off.

In some possible implementations, the communication apparatus 600 can correspondingly implement behavior and functions of the first device in the foregoing method embodiments. For example, the communication apparatus 600 may be the first device, or may be a part (for example, a chip or a circuit) used in the first device. The transceiver unit 620 may be configured to perform all receiving or sending operations performed by the first device in embodiments shown in FIG. 4 and FIG. 5, for example, S401 and S402 in the embodiment shown in FIG. 4, and/or another process for supporting the technology described in this specification. The processing unit 610 is configured to perform all operations other than the receiving and sending operations performed by the first device in embodiments shown in FIG. 4 and FIG. 5.

For example, the transceiver unit 620 is configured to receive first measurement request information from the management device, where the first measurement request information indicates to measure information about a second device; and the first device is a neighboring cell device of the second device, and the second device is an out-of-management device. The transceiver unit 620 is further configured to send second measurement request information to at least one terminal device, where the second measurement request information indicates to measure the information about the second device. The transceiver unit 620 is further configured to receive second measurement report information from the at least one terminal device, where the second measurement report information includes information that is about the second device and that is obtained by the at least one terminal device through measurement. The processing unit 610 is configured to determine first measurement report information based on the information that is about the second device and that is obtained by the at least one terminal device through measurement. The transceiver unit 620 is further configured to send the first measurement report information to the management device.

For operations performed by the processing unit 610 and the transceiver unit 620, refer to related descriptions in the foregoing method embodiments.

It should be understood that, the processing unit 610 in this embodiment of this application may be implemented by a processor or a processor-related circuit component, and the transceiver unit 620 may be implemented by a transceiver, a transceiver-related circuit component, or a communication interface.

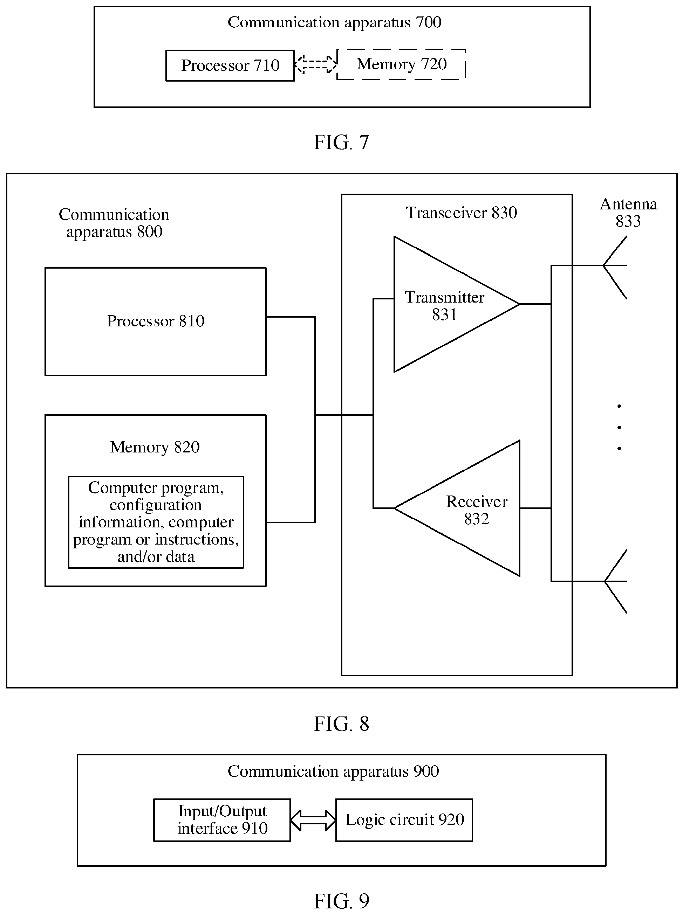

Based on a same concept, as shown in FIG. 7, an embodiment of this application provides a communication apparatus 700. The communication apparatus 700 includes a processor 710. Optionally, the communication apparatus 700 may further include a memory 720, configured to store instructions executed by the processor 710, input data required by the processor 710 to run instructions, or data generated after the processor 710 runs the instructions. The processor 710 may implement the methods shown in the foregoing method embodiments via the instructions stored in the memory 720.

Based on a same concept, as shown in FIG. 8, an embodiment of this application provides a communication apparatus 800. The communication apparatus 800 may be a chip or a chip system. Optionally, in this embodiment of this application, the chip system may include a chip, or may include the chip and another discrete component.

The communication apparatus 800 may include at least one processor 810. The processor 810 is coupled to a memory. Optionally, the memory may be located in the apparatus, or may be located outside the apparatus. For example, the communication apparatus 800 may further include at least one memory 820. The memory 820 stores a computer program, configuration information, a computer program or instructions, and/or data necessary for implementing any one of the foregoing embodiments. The processor 810 may execute the computer program stored in the memory 820, to complete the method in any one of the foregoing embodiments.

Coupling in embodiments of this application may be indirect coupling or a communication connection between apparatuses, units, or modules and may be in an electrical form, a mechanical form, or another form, and is used for information interaction between the apparatuses, the units, or the modules. The processor 810 may cooperate with the memory 820. A specific connection medium between the transceiver 830, the processor 810, and the memory 820 is not limited in this embodiment of this application.

The communication apparatus 800 may further include the transceiver 830, and the communication apparatus 800 may perform information interaction with another device via the transceiver 830. The transceiver 830 may be a circuit, a bus, a transceiver, or any other apparatus that can be configured to perform information interaction, or is referred to as a signal transceiver unit. As shown in FIG. 8, the transceiver 830 includes a transmitter 831, a receiver 832, and an antenna 833. In addition, when the communication apparatus 800 is a chip-type apparatus or circuit, the transceiver in the communication apparatus 800 may alternatively be an input/output circuit and/or a communication interface, and may input data (or receive data) and output data (or send data). The processor is an integrated processor, a microprocessor, or an integrated circuit, and the processor may determine the output data based on the input data.

In a possible implementation, the communication apparatus 800 may be used in a management device. Specifically, the communication apparatus 800 may be the management device, or may be an apparatus that can support the management device in implementing functions of the management device in any one of the foregoing embodiments. The memory 820 stores a computer program, a computer program or instructions, and/or data necessary for implementing the functions of the management device in any one of the foregoing embodiments. The processor 810 may execute the computer program stored in the memory 820, to complete the method performed by the management device in any one of the foregoing embodiments. When the communication apparatus is used in the management device, the transmitter 831 in the communication apparatus 800 may be configured to send first measurement request information through the antenna 833.

In another possible implementation, the communication apparatus 800 may be used in a first device. Specifically, the communication apparatus 800 may be the first device, or may be an apparatus that can support the first device in implementing functions of the first device in any one of the foregoing embodiments. The memory 820 stores a computer program, a computer program or instructions, and/or data necessary for implementing the functions of the first device in any one of the foregoing embodiments. The processor 810 may execute the computer program stored in the memory 820, to complete the method performed by the first device in any one of the foregoing embodiments. When the communication apparatus is used in the first device, the transmitter 831 in the communication apparatus 800 may be configured to send first measurement report information through the antenna 833.

The communication apparatus 800 provided in this embodiment may be used in the management device, to complete the method performed by the management device, or may be used in the first device, to complete the method performed by the first device. Therefore, for technical effects that can be achieved by the communication apparatus, refer to the foregoing method embodiments. Details are not described herein again.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or perform methods, steps, and logical block diagrams disclosed in embodiments of this application. The general-purpose processor may be a microprocessor, any conventional processor, or the like. Steps of the methods disclosed with reference to embodiments of this application may be directly performed and completed by a hardware processor, or may be performed and completed by using a combination of hardware in the processor and a software module.

In embodiments of this application, the memory may be a non-volatile memory, such as a hard disk drive (hard disk drive, HDD) or a solid-state drive (solid-state drive, SSD), or may be a volatile memory (volatile memory), for example, a random access memory (random access memory, RAM). The memory may alternatively be any other medium that can be configured to carry or store expected program code in a form of an instruction or a data structure and that can be accessed by a computer, but is not limited thereto. The memory in embodiments of this application may alternatively be a circuit or any other apparatus that can implement a storage function, and is configured to store a computer program, a computer program or instructions, and/or data.

Based on the foregoing embodiments, refer to FIG. 9. An embodiment of this application further provides another communication apparatus 900, including an input/output interface 910 and a logic circuit 920. The input/output interface 910 is configured to receive code instructions and transmit the code instructions to the logic circuit 920. The logic circuit 920 is configured to run the code instructions to perform the method performed by a management device or the method performed by a first device in any one of the foregoing embodiments.

The following describes in detail an operation performed by the communication apparatus used in the management device or the first device.

In an optional implementation, the communication apparatus 900 may be used in the management device, to perform the method performed by the management device, specifically, for example, the method performed by the management device in embodiments shown in FIG. 4 and FIG. 5.

For example, the input/output interface 910 is configured to output first measurement request information to the first device, where the first measurement request information indicates to measure information about a second device; and the first device is a neighboring cell device of the second device, and the second device is an out-of-management device. The input/output interface 910 is further configured to input first measurement report information from the first device, where the first measurement report information includes at least one out-of-management state of the second device, and the at least one out-of-management state of the second device is determined by the first device based on information that is about the second device and that is measured by at least one terminal device, and the out-of-management state of the second device includes that transmission of the second device is abnormal or that the second device is powered off. The logic circuit 920 is configured to determine, based on the at least one out-of-management state of the second device, that transmission of the second device is abnormal or that the second device is powered off.

In another optional implementation, the communication apparatus 900 may be used in the first device, to perform the method performed by the first device, specifically, for example, the method performed by the first device in embodiments shown in FIG. 4 and FIG. 5.

For example, the input/output interface 910 is configured to input first measurement request information from the management device, where the first measurement request information indicates to measure information about a second device; and the first device is a neighboring cell device of the second device, and the second device is an out-of-management device. The input/output interface 910 is further configured to output second measurement request information to at least one terminal device, where the second measurement request information indicates to measure the information about the second device. The input/output interface 910 is further configured to input second measurement report information from the at least one terminal device, where the second measurement report information includes information that is about the second device and that is obtained by the at least one terminal device through measurement. The logic circuit 920 is configured to determine first measurement report information based on the information that is about the second device and that is obtained by the at least one terminal device through measurement. The input/output interface 910 is further configured to output the first measurement report information to the management device.

The communication apparatus 900 provided in this embodiment may be used in the management device, to complete the method performed by the management device, or may be used in the first device, to complete the method performed by the first device. Therefore, for technical effects that can be achieved by the communication apparatus, refer to the foregoing method embodiments. Details are not described herein again.

Based on the foregoing embodiments, an embodiment of this application further provides a communication system. The communication system includes at least one communication apparatus used in a management device and at least one communication apparatus used in a first device. For technical effects that can be achieved by the communication system, refer to the foregoing method embodiments. Details are not described herein again.

Based on the foregoing embodiments, an embodiment of this application further provides a computer-readable storage medium. The computer-readable storage medium stores a computer program or instructions. When the instructions are executed, the method performed by a management device or the method performed by a first device is implemented in any one of the foregoing embodiments is implemented. The computer-readable storage medium may include any medium that can store program code, such as a USB flash drive, a removable hard disk drive, a read-only memory, a random access memory, a magnetic disk, or an optical disc.

To implement functions of communication apparatuses in FIG. 6 to FIG. 9, an embodiment of this application further provides a chip, including a processor configured to support the communication apparatus in implementing a function involved in a management device or a first device in the foregoing method embodiments. In a possible design, the chip is connected to a memory, or the chip includes a memory. The memory is configured to store a computer program or instructions and data necessary for the communication apparatus.

A person skilled in the art should understand that, embodiments of this application may be provided as a method, a system, or a computer program product. Therefore, in this application, a form of hardware only embodiments, software only embodiments, or embodiments with a combination of software and hardware may be used. In addition, in this application, a form of a computer program product that is implemented on one or more computer-usable storage media (including but not limited to a disk memory, a CD-ROM, an optical memory, and the like) including computer-usable program code may be used.

This application is described with reference to flowcharts and/or block diagrams of the method, the device (system), and the computer program product according to embodiments of this application. It should be understood that, computer programs or instructions may be used to implement each procedure and/or each block in the flowcharts and/or the block diagrams and a combination of a procedure and/or a block in the flowcharts and/or the block diagrams. The computer programs or the instructions may be provided for a general-purpose computer, a dedicated computer, an embedded processor, or a processor of another programmable data processing device to generate a machine, so that instructions executed by the computer or the processor of the another programmable data processing device generate an apparatus configured to implement a function specified in one or more procedures in the flowcharts and/or in one or more blocks in the block diagrams.

The computer programs or the instructions may alternatively be stored in a computer-readable memory that can direct a computer or another programmable data processing device to work in a specific manner, so that the instructions stored in the computer-readable memory generate an artifact including an instruction apparatus. The instruction apparatus implements a function specified in one or more procedures in the flowcharts and/or in one or more blocks in the block diagrams.

The computer programs or the instructions may alternatively be loaded onto a computer or another programmable data processing device, so that a series of operation steps are performed on the computer or the another programmable device to generate computer-implemented processing, so that instructions executed on the computer or the another programmable device provide steps for implementing a function specified in one or more procedures in the flowcharts and/or in one or more blocks in the block diagrams.

It is clear that, a person skilled in the art may make various modifications and variations to embodiments of this application without departing from the scope of embodiments of this application. In this way, provided that the modifications and variations to embodiments of this application fall within the scope of the claims of this application and equivalent technologies of the claims, this application is also intended to include the modifications and variations.

## Claims

1. A method for identifying an out-of-management state of a device, comprising:
sending, by a management device, first measurement request information to a first device, wherein the first measurement request information indicates to measure information about a second device; and the first device is a neighboring cell device of the second device, and the second device is an out-of-management device;
receiving, by the management device, first measurement report information from the first device, wherein the first measurement report information comprises at least one piece of information about the second device, the at least one piece of information about the second device is used for determining an out-of-management state of the second device, and the out-of-management state of the second device comprises that transmission of the second device is abnormal or that the second device is powered off; and
determining, by the management device based on the at least one piece of information about the second device, that transmission of the second device is abnormal or that the second device is powered off.

2. The method according to claim 1, wherein the first measurement report information comprises at least one out-of-management state of the second device, and the at least one out-of-management state of the second device is determined by the first device based on information that is about the second device and that is measured by at least one terminal device.

3. The method according to claim 1 or 2, wherein the first measurement report information comprises the information that is about the second device and that is measured by at least one terminal device, and the at least one terminal device camps on the first device.

4. The method according to any one of claims 1 to 3, further comprising:
determining, by the management device, the first device based on configuration information of the second device, wherein the configuration information comprises neighboring cell device information of the second device.

5. The method according to any one of claims 1 to 4, wherein the first device is first N devices sorted in ascending order of distances from neighboring cell devices of the second device to the second device, and N is an integer greater than or equal to 1; or
the first device is first N devices sorted in descending order of signal strength of neighboring cell devices of the second device, and N is an integer greater than or equal to 1; and the signal strength of the neighboring cell devices of the second device is reported by the second device.

6. The method according to claim 2, wherein the determining, by the management device based on the at least one piece of information about the second device, that transmission of the second device is abnormal or that the second device is powered off comprises:
determining, when at least one out-of-management state that transmission of the second device is abnormal exists in the at least one out-of-management state of the second device, that transmission of the second device is abnormal; or
determining, when at least one out-of-management state that transmission of the second device is abnormal does not exist in the at least one out-of-management state of the second device, that the second device is powered off.

7. The method according to any one of claims 1 to 6, wherein the management device stores the configuration information of the second device, and the configuration information comprises the neighboring cell device information of the second device.

8. The method according to any one of claims 1 to 7, wherein the management device stores at least one of inventory information, alarm information, performance data information, and log information of the second device.

9. A method for identifying an out-of-management state of a device, comprising:
receiving, by a first device, first measurement request information from a management device, wherein the first measurement request information indicates to measure information about a second device; and the first device is a neighboring cell device of the second device, and the second device is an out-of-management device;
sending, by the first device, second measurement request information to at least one terminal device, wherein the second measurement request information indicates to measure the information about the second device;
receiving, by the first device, second measurement report information from the at least one terminal device, wherein the second measurement report information comprises information that is about the second device and that is obtained by the at least one terminal device through measurement; and
sending, by the first device, first measurement report information to the management device, wherein the first measurement report information is determined based on the second measurement report information of the at least one terminal device.

10. The method according to claim 9, wherein the first measurement report information comprises at least one out-of-management state of the second device, the at least one out-of-management state of the second device is determined based on the information that is about the second device and that is obtained by the at least one terminal device through measurement, and the out-of-management state of the second device comprises that transmission of the second device is abnormal or that the second device is powered off.

11. The method according to claim 9 or 10, wherein the first measurement report information comprises the information that is about the second device and that is measured by the at least one terminal device.

12. The method according to any one of claims 9 to 11, wherein the second measurement request information comprises at least one of the following:
physical cell identifier PCI measurement request information, cell global identifier CGI measurement request information, and new radio cell global identifier NCGI measurement request information.

13. The method according to any one of claims 9 to 12, wherein the at least one terminal device is determined based on a measurement report reported by M terminal devices; and
the at least one terminal device is a terminal device whose measurement report comprises a measurement result of the second device and that is in the M terminal devices, and M is an integer greater than or equal to 1.

14. A communication apparatus, comprising a unit configured to perform the method according to any one of claims 1 to 8.

15. A communication apparatus, comprising a unit configured to perform the method according to any one of claims 9 to 13.

16. A communication apparatus, wherein the apparatus comprises a processor and a memory, wherein
the memory is configured to store a computer program or instructions; and
the processor is configured to execute the computer program or the instructions in the memory, to cause the apparatus to perform the method according to any one of claims 1 to 8, or cause the apparatus to perform the method according to any one of claims 9 to 13.

17. A computer-readable storage medium, wherein the computer-readable storage medium stores computer-executable instructions; and when the computer-executable instructions are invoked by an electronic apparatus, the electronic apparatus is enabled to perform the method according to any one of claims 1 to 8, or the electronic apparatus is enabled to perform the method according to any one of claims 9 to 13.

18. A computer program product, comprising computer-executable instructions, wherein when the computer-executable instructions are run on a computer, the computer is enabled to perform the method according to any one of claims 1 to 8 or the method according to any one of claims 9 to 13.

19. A communication system, comprising an apparatus configured to perform the method according to any one of claims 1 to 8 and an apparatus configured to perform the method according to any one of claims 9 to 13.
